# FASCICULE DE BREVET EUROPEEN

(11) **EP 4 490 095 B1**
(45) Date de publication et mention de la délivrance du brevet: **29.04.2026**
(21) Numéro de dépôt: 23709357.0
(22) Date de dépôt: 01.03.2023
(51) Int. Cl.: B66F 9/065, B66F 9/075

(54) **MACHINE DE MANUTENTION COMPORTANT UN RÉSERVOIR DESTINÉ À CONTENIR DE L'HYDROGÈNE**
HANDHABUNGSMASCHINE MIT EINEM BEHÄLTER ZUR AUFNAHME VON WASSERSTOFF
HANDLING MACHINE COMPRISING A TANK INTENDED TO CONTAIN HYDROGEN

(30) Priorité: 11.03.2022 FR 2202149
(43) Date de publication de la demande: 15.01.2025
(73) Titulaire: MANITOU BF, 44150 Ancenis (FR)
(72) Inventeur: BESSEAU, Maurice, 44150 ANCENIS (FR); SCHELL, Xavier, 44150 ANCENIS (FR); BREHIER, Valentin, 44150 ANCENIS (FR)
(74) Mandataire: Loyer & Abello
(86) Numéro de dépôt international: PCT/EP2023/055231
(87) Numéro de publication internationale: WO 2023/169907

(56) Documents cités:
- DE-A1- 10 013 079
- US-A1- 2009 236 182
- US-A1- 2015 372 322
- US-A1- 2017 120 738
- US-A1- 2021 396 354
- US-B1- 6 688 481

## Description

### Domaine technique

L'invention se rapporte au domaine des machines de manutention comportant un dispositif de manutention de charge et un réservoir destiné à contenir de l'hydrogène.

### Arrière-plan technologique

Le document US6688481 divulgue une grue qui comporte un châssis, un bras télescopique qui est monté articulé sur le châssis et un moteur électrique qui est configuré pour assurer la propulsion de la grue. Dans un mode de réalisation, la grue comporte un système de pile à combustible qui est relié au moteur électrique afin de l'alimenter en énergie électrique. Le système de pile à combustible est disposé sur une partie arrière du châssis du véhicule afin de former un contrepoids. Le document US6688481 divulgue le préambule de la revendication 1.

Une telle machine de manutention n'est pas pleinement satisfaisante, notamment en ce que la disposition précitée du système de pile à combustible ne permet pas de protéger efficacement le réservoir à hydrogène contre les chocs alors que ceux-ci constituent, avec les incendies, les principales causes d'explosion du réservoir.

### Résumé

Une idée à la base de l'invention consiste à proposer une machine de manutention comprenant un réservoir destiné à contenir de l'hydrogène et qui offre une sécurité renforcée.

Selon un premier objet, l'invention concerne une machine de manutention comportant :
- un châssis présentant un axe longitudinal médian et comprenant deux longerons longitudinaux s'étendant de part et d'autre de l'axe longitudinal médian ;
- un dispositif de manutention de charge qui est monté mobile sur le châssis ;
- une cabine de conduite qui est fixée au châssis et est positionnée d'un premier côté du châssis par rapport à l'axe longitudinal médian du châssis ;
- au moins un réservoir destiné à contenir de l'hydrogène ; et
- un équipement consommateur d'hydrogène qui est raccordé au réservoir par une ligne d'alimentation et qui est choisi parmi une pile à combustible et un moteur à combustion interne à hydrogène, la machine de manutention étant caractérisée en ce que :
- le réservoir est logé dans le châssis, entre les deux longerons longitudinaux ; en en ce que elle comprend un caisson qui est fixé au châssis et est disposé d'un deuxième côté du châssis, opposé au premier côté, par rapport à l'axe longitudinal médian et dans laquelle l'équipement consommateur d'hydrogène est logé dans le caisson.

Ainsi, l'agencement du réservoir dans le châssis, entre les deux longerons longitudinaux offre notamment une excellente protection contre les chutes d'objets et les chocs latéraux.

Selon des modes de réalisation, une telle machine de manutention peut présenter une ou plusieurs des caractéristiques suivantes.

Selon un mode de réalisation, le réservoir est un réservoir d'hydrogène sous pression adapté au stockage de l'hydrogène à une pression maximale comprise entre 300 et 700 bars. Selon un autre mode de réalisation, le réservoir est un réservoir de stockage de l'hydrogène sous forme d'hydrures. Selon encore un autre mode de réalisation, le réservoir est un réservoir de stockage d'hydrogène à l'état liquide.

Selon un mode de réalisation, la ligne d'alimentation qui raccorde le réservoir à l'équipement consommateur d'hydrogène comporte un régulateur de pression, le régulateur de pression ainsi qu'une portion amont de la ligne d'alimentation qui relie le régulateur de pression au réservoir étant logés dans le châssis, entre les deux longerons longitudinaux. Ceci permet de garantir la protection de la portion de la ligne d'alimentation qui est la plus critique au regard des risques d'explosion.

Selon un mode de réalisation, la ligne d'alimentation comporte un dispositif passe-paroi qui est logé dans un orifice de l'un des deux longerons longitudinaux et qui permet à la ligne d'alimentation de traverser ledit longeron longitudinal. Ceci permet de faciliter la mise en place du circuit d'hydrogène, et notamment de la ligne d'alimentation lorsqu'elle est destinée à relier un réservoir placé dans le châssis à un équipement consommateur d'hydrogène placé dans le caisson. Ceci permet également d'éviter ou pour le moins de limiter le passage de gaz entre l'intérieur du châssis et l'intérieur du caisson en cas de fuite du réservoir, de l'équipement consommateur d'hydrogène et/ou du circuit d'hydrogène.

Selon un mode de réalisation, la machine de manutention comprend au moins un moteur électrique qui est configuré pour déplacer la machine de manutention ou actionner le dispositif de manutention de charge et l'équipement consommateur d'hydrogène est une pile à combustible qui est configurée pour générer de l'énergie électrique destinée à alimenter le moteur électrique.

Selon un mode de réalisation, la machine de manutention comporte un dispositif de stockage d'énergie électrique, la pile à combustible et le dispositif de stockage d'énergie électrique étant électriquement raccordés, d'une part, l'un à l'autre, et, d'autre part, en parallèle au moteur électrique.

Selon un mode de réalisation, le dispositif de stockage d'énergie électrique comporte une ou plusieurs batteries et/ou un ou plusieurs supercondensateurs.

Selon un mode de réalisation, le dispositif de stockage d'énergie électrique est logé dans un logement ménagé sous la cabine de conduite. Un tel agencement permet de séparer le dispositif de stockage d'énergie électrique du réservoir et de la pile à combustible, ce qui l'éloigne des fuites d'hydrogènes susceptibles de se produire et limite encore davantage les risques d'incendie. Ceci isole également le dispositif de stockage d'énergie électrique de la chaleur générée par la pile à combustible et limite ainsi les risques de surchauffe dudit dispositif de stockage d'énergie électrique.

Selon un mode de réalisation, la machine de manutention comprend en outre un convertisseur de tension DC/DC qui est raccordé, d'une part, à la pile à combustible et, d'autre part, au moteur électrique et au dispositif de stockage d'énergie électrique.

Selon un mode de réalisation, le convertisseur de tension DC/DC est logé dans un logement ménagé sous la cabine de conduite. Ceci permet de protéger le convertisseur de tension contre les chocs, de l'isoler des éventuelles fuites d'hydrogène susceptibles de se produire dans le châssis ou le caisson ainsi que de la chaleur générée par la pile à combustible.

Selon un mode de réalisation, l'au moins un réservoir présente une forme de cylindre de révolution autour d'un axe central, le réservoir étant orienté de telle sorte que l'axe central soit parallèle à l'axe longitudinal médian.

Selon un mode de réalisation, la machine de manutention comprend :
- un essieu avant et un essieu arrière qui sont montés sur le châssis transversalement à l'axe longitudinal médian et comportant chacun deux roues ;
- un arbre de transmission qui accouple l'essieu avant et l'essieu arrière à un moteur, l'arbre de transmission s'étendant à l'intérieur du châssis, entre les deux longerons longitudinaux, parallèlement à l'axe longitudinal médian du châssis ;
- au moins deux réservoirs destinés à contenir de l'hydrogène qui sont logés dans le châssis, entre les deux longerons longitudinaux, latéralement de part et d'autre de l'arbre de transmission. Une telle disposition permet d'optimiser le volume d'hydrogène susceptible d'être stocké lorsque la transmission de la machine présente un arbre de transmission ayant la disposition précitée.

Selon une variante de réalisation, la machine de manutention comporte au moins quatre réservoirs destinés à contenir de l'hydrogène qui sont logés dans le châssis, deux des quatre réservoirs, présentant des axes centraux qui sont disposés au-dessus et latéralement de part et d'autre de l'arbre de transmission, et les deux autres réservoirs présentant des axes centraux qui sont disposés en-dessous et latéralement de part et d'autre de de l'arbre de transmission.

Selon un mode de réalisation, la machine de manutention comprend :
- un essieu avant et un essieu arrière qui sont montés sur le châssis transversalement à l'axe longitudinal médian et comportant chacun deux roues ;
- deux moteurs électriques qui sont respectivement accouplés à l'essieu avant et à l'essieu arrière par un dispositif de transmission et sont logés à l'intérieur du châssis respectivement à l'avant et à l'arrière de l'au moins un réservoir.

Selon un mode de réalisation le dispositif de manutention de charge comporte un bras de levage qui est articulé aux deux longerons longitudinaux, entre lesdits longerons longitudinaux, de façon à être mobile à pivotement par rapport aux deux longerons longitudinaux autour d'un axe de pivotement transversal.

Selon un mode de réalisation, le ou chaque réservoir est fixé au châssis au moyens de deux colliers ceinturant une paroi cylindrique du réservoir, chaque collier comportant deux parties fixées l'une à l'autre par des organes de fixation et dont l'une est fixée à un élément du châssis, tel qu'un longeron longitudinal ou une traverse reliant les longerons longitudinaux. De tels moyens de fixation du réservoir autorisent les dilatations ou contractions du réservoir selon sa direction longitudinale.

Selon un autre mode de réalisation, le ou chaque réservoir comporte deux cols faisant saillie depuis l'une et l'autre des deux extrémités du réservoir, le réservoir étant fixé au châssis au moyen de deux supports de montages qui sont respectivement fixés autour de l'un et l'autre des deux cols.

Selon une variante de réalisation avantageuse, une extrémité du réservoir est maintenue fixe par rapport au châssis au moyen d'un des deux supports de montage tandis que l'autre extrémité est montée coulissante par rapport à l'autre support de montage. Ceci autorise les dilatations ou contractions du réservoir.

Selon un mode de réalisation, la pile à combustible est équipée d'un compresseur d'alimentation en air et d'un dispositif humidificateur.

Selon un mode de réalisation, la machine de manutention comporte un dispositif de refroidissement permettant de refroidir la pile à combustible, ledit dispositif de refroidissement comportant, par exemple, un circuit de refroidissement équipé d'un échangeur de chaleur, et étant logé dans le caisson.

Selon un mode de réalisation, la machine de manutention comprend un essieu avant et un essieu arrière qui sont montés sur le châssis transversalement à l'axe longitudinal médian X et comportant chacun deux roues.

Selon un mode de réalisation, la cabine de conduite est située entre l'essieu avant et l'essieu arrière.

Selon un mode de réalisation, le caisson est situé entre l'essieu avant et l'essieu arrière.

Selon un mode de réalisation, la machine de manutention comporte au moins deux moteurs respectivement configurés pour actionner le dispositif de manutention de charge et déplacer la machine de manutention.

Selon un mode de réalisation, la machine de manutention comporte deux moteurs électriques qui sont respectivement accouplés à l'essieu avant et à l'essieu arrière par un dispositif de transmission.

Selon un mode de réalisation, la machine de manutention comporte un moteur électrique qui est accouplé à l'essieu avant et à l'essieu arrière par un dispositif de transmission.

Selon un mode de réalisation, le moteur pour actionner le dispositif de manutention de charge est un moteur entraînant une pompe hydraulique, la pompe hydraulique étant raccordée à un ou plusieurs vérins hydrauliques agencés pour déplacer un bras de levage du dispositif de manutention de charge.

Selon un mode de réalisation, le dispositif de manutention de charge comporte un bras de levage qui s'étend dans un plan longitudinal entre le caisson et la cabine de conduite et qui est monté articulé sur le châssis selon un axe de pivotement P transversal.

Selon un mode de réalisation, le bras de levage est un bras télescopique.

Selon un mode de réalisation, la machine de manutention est un chariot télescopique.

### Breve description des figures

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.
[fig.1] La figure 1 est une vue schématique de dessus d'une machine de manutention selon un premier mode de réalisation.
[fig.2] La figure 2 illustre partiellement la machine de manutention de la figure 1 et notamment son châssis ainsi qu'un réservoir qui est destiné à contenir de l'hydrogène et qui est logé à l'intérieur dudit châssis.
[fig.3] La figure 3 illustre un réservoir équipé de moyens de fixation destinés à fixer le réservoir au châssis selon une première variante de réalisation.
[fig.4] La figure 4 illustre un réservoir équipé de moyens de fixation destinés à fixer le réservoir au châssis selon une seconde variante de réalisation.
[fig.5] La figure 5 est une vue schématique d'un circuit d'hydrogène selon un mode de réalisation.
[fig.6] La figure 6 est une vue en coupe d'un dispositif passe-paroi permettant à un circuit d'hydrogène de traverser l'un des longerons longitudinaux du châssis.
[fig.7] La figure 7 est une vue similaire à celle de la figure 2, illustrant partiellement une machine de manutention selon un deuxième mode de réalisation.
[fig.8] La figure 8 est une vue détaillée, en coupe transversale, de la machine de manutention de la figure 7 illustrant la disposition des réservoirs dans le châssis.
[fig.9] La figure 9 est une vue schématique de dessus d'une machine de manutention selon un troisième mode de réalisation.

### Description des modes de réalisation

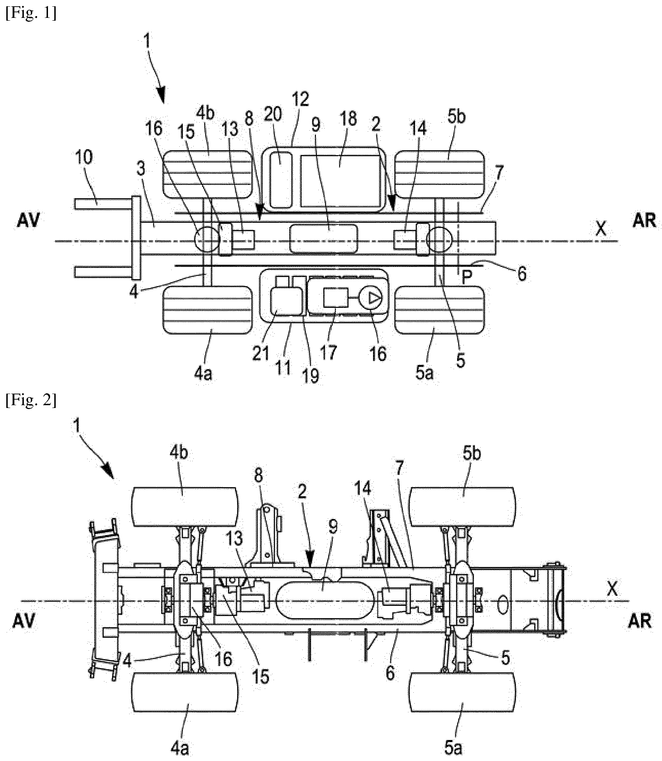

Par convention, la direction « longitudinale » de la machine de manutention correspond à l'orientation avant-arrière de la machine. Par ailleurs, les termes « arrière » et « avant », respectivement désignés « AR » et « AV » sur les figures 1, 2, 7 et 9, sont utilisés pour définir la position relative d'un élément par rapport à un autre selon la direction longitudinale. La direction « transversale » est orientée perpendiculairement à la direction longitudinale.

En référence aux figures 1 et 2, on décrit une machine de manutention 1 selon un premier mode de réalisation. La machine de manutention 1 comporte un châssis 2 et un dispositif de manutention de charge, ici un bras de levage 3, qui est monté mobile sur le châssis 2. Le bras de levage 3 est, par exemple, un bras télescopique. Dans ce cas, la machine de manutention 1 peut notamment être un chariot télescopique.

Le châssis 2 est mobile. Pour ce faire, la machine de manutention 1 comporte deux essieux, un essieu avant 4 et un essieu arrière 5, qui sont chacun montés sur le châssis 2 selon un axe transversal et sont chacun équipés de deux roues, l'une à gauche 4a, 5a et l'autre à droite 4b, 5b. Au moins un des deux essieux avant 4 et arrière 5 est monté en rotation autour de son axe afin d'assurer le déplacement du châssis. Les essieux avant 4 et arrière 5 peuvent également être montés sur le châssis avec une possibilité de débattement autour de l'axe longitudinal de manière à compenser le dévers de la machine de manutention.

Le châssis 2 comporte une paire de longerons longitudinaux 6, 7, visibles sur les figures 1 et 2. Les longerons longitudinaux 6, 7 sont des pièces métalliques, globalement planes, parallèles entre elles, qui s'étendent parallèlement à l'axe longitudinal médian X, respectivement de part et d'autre dudit axe longitudinal médian X. Les longerons longitudinaux 6, 7 sont reliés l'un à l'autre, par des traverses, visibles sur la figure 2, de manière à former un espace 8 permettant le logement de composants de la machine de manutention 1, et notamment un ou plusieurs réservoirs 9 destinés à contenir de l'hydrogène, tel que détaillé par la suite. L'espace 8 est avantageusement fermé sur sa partie supérieure par des plaques de tôles, non illustrées, qui sont fixées aux longerons longitudinaux 6, 7.

Comme représenté sur la figure 1, le bras de levage 3 s'étend dans un plan longitudinal qui est, de préférence, médian, c'est-à-dire que l'axe longitudinal médian X est inclus dans ce plan. Le bras de levage 3 est articulé aux deux longerons longitudinaux 6, 7, entre ceux-ci, de façon à être mobile à pivotement autour d'un axe de pivotement P, transversal. Le bras de levage 3 peut être réalisé de différentes manières, notamment sous la forme de plusieurs sections télescopiques ou en variante sous la forme d'un bras de longueur fixe. Une extrémité du bras de levage 3 opposée à l'axe de pivotement P peut porter un outil de travail 10 ou un porte-outil modulaire susceptible de recevoir des outils de travail 10 de plusieurs types. Par outil de travail 10, on désigne, par exemple, une paire de fourches, un godet, un treuil, une pince ou autres.

Par ailleurs, la machine de manutention 1 comporte une cabine de conduite 11 dans laquelle un conducteur peut prendre place et qui est notamment équipée d'un siège, non représenté, et d'équipements de pilotage de la machine de manutention. La cabine de conduite 11 est positionnée, d'un premier côté de l'axe longitudinal médian X, sur le côté gauche dans le mode de réalisation représenté, et entre l'essieu avant 4 et l'essieu arrière 5. La machine de manutention 1 comporte, en outre, un caisson 12 qui est positionné par rapport à la cabine de conduite 11, de l'autre côté de l'axe longitudinal médian X de la machine de manutention 1. Plus particulièrement, le caisson 12 et la cabine de conduite 11 sont positionnés de part et d'autre de la paire de longerons longitudinaux 6, 7.

La machine de manutention 1 comporte un ou plusieurs actionneurs linéaires, non représentés, tels que des vérins hydrauliques, qui sont chacun montés articulés, d'une part, sur le bras de levage 3 et, d'autre part, sur le châssis 2 de la machine de manutention 1, ce qui permet de faire pivoter le bras de levage 3, par rapport au châssis 2, autour de l'axe de pivotement P. Les vérins hydrauliques sont raccordés à un circuit hydraulique équipé d'une pompe hydraulique 16, visible sur la figure 1. Dans le mode de réalisation représenté, la pompe hydraulique 16 est entraînée par un moteur, tel qu'un moteur électrique 17. La pompe hydraulique 16 ainsi que le moteur électrique 17 sont ici logés dans un espace ménagé sous la cabine de conduite 11.

La machine de manutention 1 comporte au moins un moteur électrique qui est configuré pour assurer le déplacement de la machine de manutention 1. Dans le mode de réalisation représenté sur la figure 1, la machine de manutention 1 comporte deux moteurs électriques 13, 14 qui assurent son déplacement et qui sont chacun logés à l'intérieur du châssis 2, entre les deux longerons longitudinaux 6, 7. Chaque moteur électrique 13, 14 est accouplé à l'un des essieux avant 4 ou arrière 5 par l'intermédiaire d'un dispositif de transmission. Ainsi, la machine de manutention 1 présente quatre roues motrices. Dans le mode de réalisation représenté, chaque dispositif de transmission comporte un réducteur 15 et un différentiel 16. De manière alternative, le dispositif de transmission est un dispositif de transmission hydraulique.

La machine de manutention 1 comporte, par ailleurs, un système d'alimentation pour alimenter en énergie électrique au moins l'un et de préférence la totalité des moteurs électriques 13, 14, 16 précités.

Le système d'alimentation électrique comporte au moins un réservoir 9 destiné à stocker de l'hydrogène, une pile à combustible 18 ainsi qu'un dispositif de stockage d'énergie électrique 19 comprenant une ou plusieurs batteries et/ou un ou plusieurs supercondensateurs. Les batteries peuvent être de tout type connu, par exemple du type plomb-acide ou de préférence du type lithium-ion. Le dispositif de stockage d'énergie électrique 19 est connecté au(x) moteur(s) électrique(s) 13, 14, 16 en parallèle de la pile à combustible 18.

Le réservoir 9 est, par exemple, adapté pour stocker l'hydrogène à l'état gazeux à une pression maximale comprise entre 300 et 700 bars, par exemple de l'ordre de 350 bars. Selon une autre variante de réalisation, le réservoir 9 est adapté pour stocker l'hydrogène à l'état solide sous forme d'hydrures métalliques. Selon encore une autre variante de réalisation, le réservoir 9 est adapté pour stocker l'hydrogène à l'état liquide.

Comme illustré sur les figures 1 et 2, le réservoir 9 est logé dans le châssis 2 de la machine de manutention, c'est-à-dire dans l'espace 8 ménagé entre les deux longerons longitudinaux 6, 7. Une telle disposition du réservoir 9 lui offre une excellente protection contre les chutes d'objets et les chocs latéraux, ce qui permet de limiter considérablement les risques d'explosion du réservoir 9. Dans le mode de réalisation représenté, le réservoir 9 présente une forme de cylindre de révolution. En outre, le réservoir 9 est de préférence orienté de sorte que les génératrices du cylindre de révolution soient orientées parallèlement à la direction longitudinale de la machine de manutention 1. De préférence, le réservoir 9 est en outre disposé entre l'essieu avant 4 et l'essieu arrière 5 et entre les deux moteurs électriques 13, 14. Le réservoir 9 présente typiquement un volume compris entre 50 et 300 litres, par exemple de l'ordre de 100 litres.

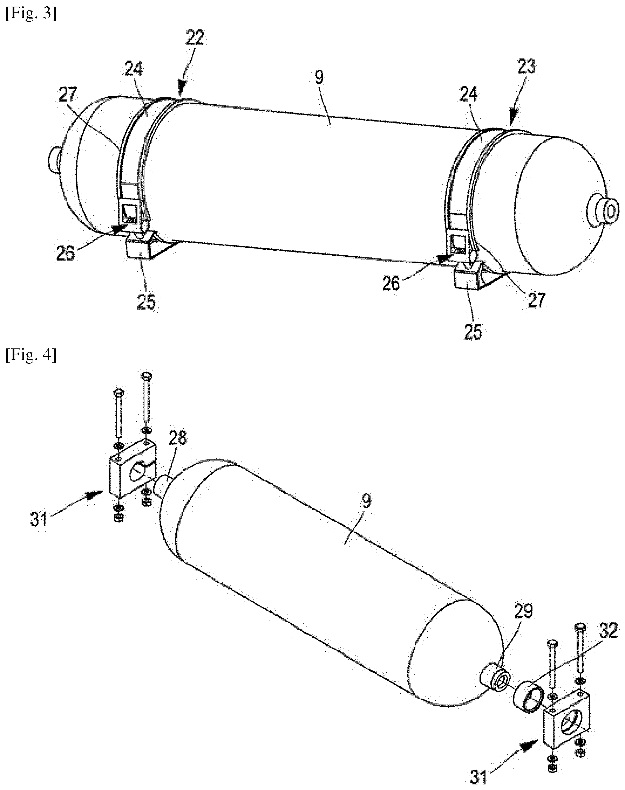

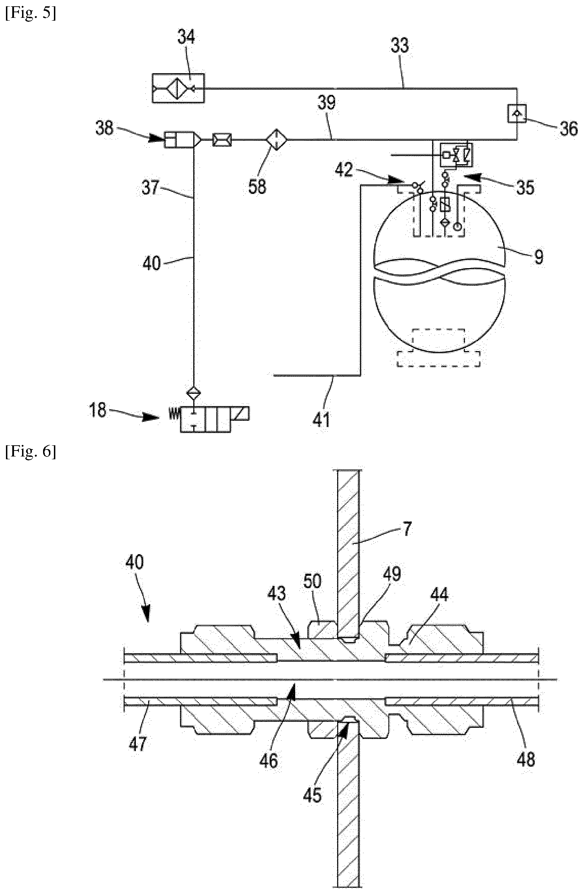

Selon une variante de réalisation, représentée sur la figure 3, le réservoir 9 est fixé au châssis 2 au moyen de deux colliers 22, 23. Les deux colliers 22, 23 ceinturent la paroi cylindrique du réservoir 9, respectivement à proximité de l'une et l'autre des deux extrémités du réservoir 9. Sur la figure 6, chaque collier 22, 23 comporte deux portions 24, 25 qui sont solidarisées l'une à l'autre par des organes de fixation 26. L'une des portions, ici celle référencée 24, est fixée à un élément du châssis 2, non représenté, par exemple à l'un des longerons longitudinaux 6, 7 ou à une traverse reliant les deux longerons longitudinaux 6, 7. De manière avantageuse, une bande élastomère 27 est interposée radialement entre chaque collier 22, 23 et le réservoir 9. De tels moyens de fixation autorisent la contraction ou la dilatation du réservoir 9.

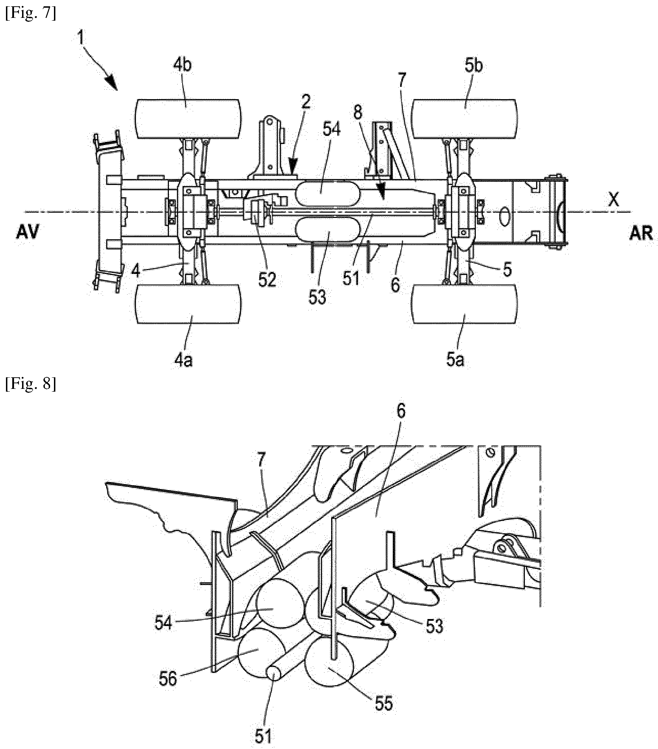

La figure 7 représente des moyens de fixation du réservoir 9 au châssis 2 selon une autre variante de réalisation. Le réservoir 9 comporte deux cols 28, 29 faisant saillies depuis l'une et l'autre de ses deux extrémités. Le réservoir 9 est fixé au châssis 2 au moyen de deux supports de montage 30, 31 qui sont respectivement montés autour de l'un et l'autre des deux cols 28, 29 et qui sont chacun fixés à un élément du châssis 2, non visible sur la figure 7, par exemple à l'un des longerons longitudinaux 6, 7 ou à une traverse reliant les deux longerons longitudinaux, 6, 7. Une extrémité du réservoir 9 est maintenue fixe par rapport au châssis 2 au moyen d'un des deux supports de montage 30 tandis que l'autre extrémité est montée coulissante par rapport à l'autre support de montage 31, ce qui autorise les dilatations ou contractions du réservoir. Pour ce faire, l'un des cols 29 du réservoir 9 est montée coulissant à l'intérieur d'une bague qui est fixée au deuxième support de montage 31. La bague 32 est, par exemple, fabriquée dans un matériau plastique à faible coefficient de frottement, tel que le polyéthylène.

La figure 7 illustre un circuit d'hydrogène selon un mode de réalisation. Le circuit d'hydrogène comporte une ligne de remplissage 33 qui est équipée d'une goulotte 34 destinée à recevoir un pistolet de remplissage d'une station de ravitaillement en hydrogène et qui conduit jusqu'à une valve d'entrée 35 du réservoir 9 au travers d'une valve anti-retour 36. Le circuit d'hydrogène comporte également une ligne d'alimentation 37 destinée à conduire l'hydrogène du réservoir 9 vers la pile à combustible 18. La ligne d'alimentation 37 comporte un filtre 58 ainsi qu'un régulateur de pression 38 qui permet de diminuer la pression afin d'alimenter la pile à combustible18 avec de l'hydrogène présentant une pression compatible avec son fonctionnement, c'est-à-dire inférieure à celle à laquelle il est stocké dans le réservoir 9. Par convention, la portion de la ligne d'alimentation 37 qui est disposée en amont du régulateur de pression 38 est désignée portion haute pression 39 tandis que la portion disposée en aval de celui-ci est désignée portion basse pression 40.

Par ailleurs, le circuit d'hydrogène comporte un circuit de vidange 41 qui permet de vider le contenu du réservoir 9, notamment en cas d'urgence. Pour ce faire, le circuit de vidange 41 est raccordé à une vanne de dégazage 42 du réservoir 9.

En revenant aux figures 1 et 2, on observe que la pile à combustible 18 est avantageusement logée à l'intérieur du caisson 12. Cette disposition permet ainsi de séparer le réservoir 9 de la pile à combustible 18 et de limiter ainsi les risques d'incendie du réservoir 9. Par ailleurs, pour des raisons de sécurité également, le régulateur de pression 38, illustré sur la figure 5, est logé à l'intérieur du châssis 2. Ainsi, la portion de la ligne d'alimentation 37 qui est la plus critique au regard des risques d'explosion, à savoir sa portion haute-pression 39, est logée à l'intérieur du châssis 2 et est, par conséquent, la mieux protégée. A contrario, seule la portion de la ligne de chargement la moins critique au regard des risques d'explosion, à savoir la portion basse pression 40 s'étend dans le caisson 12 et à ce titre présente une protection moindre.

De manière avantageuse, la portion basse pression 39 de la ligne d'alimentation 37 traverse l'un des longerons longitudinaux 6, 7 du châssis 12 afin de raccorder le réservoir 9 ainsi que le régulateur de pression 38 qui sont logés à l'intérieur du châssis 2, d'une part, à la pile à combustible 18 logé dans le caisson 12, d'autre part. Pour ce faire, la ligne d'alimentation 37 comporte, avantageusement, un dispositif passe-paroi 43, illustré sur la figure 6. Le dispositif passe paroi 43 comporte un corps 44 qui est conçu pour s'engager à l'intérieur d'une ouverture 45 ménagée dans le longeron longitudinal 7. Le corps 44 du dispositif passe-paroi 43 présente un canal 46 qui est raccordé à une partie en amont 47 et à une partie en aval 48 de la portion basse-pression 40. Le corps 44 du dispositif passe-paroi 43 comporte, en outre, une surface d'appui 49 venant en contact contre un côté du longeron longitudinal 7 tandis qu'un autre élément 50, tel qu'un écrou, est fixé sur le corps 44 et vient en appui contre l'autre côté du longeron longitudinal 7, ce qui permet de fixer le dispositif passe-paroi 43 audit longeron longitudinal 7.

De manière connue en soi, la pile à combustible 18 est le siège d'une réaction d'oxydoréduction qui transforme l'hydrogène provenant du réservoir 9 et l'oxygène de l'air apporté par le compresseur en électricité, en eau et en chaleur. Aussi, en revenant à la figure 1, on observe que la machine de manutention 1 comporte également un dispositif de refroidissement 20, visible sur la figure 1, permettant de refroidir la pile à combustible 18. Le dispositif de refroidissement 20 est également logée à l'intérieur du caisson 12. Selon un mode de réalisation, le dispositif de refroidissement 20 comporte un circuit de refroidissement équipé d'un échangeur de chaleur.

Par ailleurs, la pile à combustible 18 est, en outre, équipée d'un compresseur d'alimentation en air permettant de compresser l'air comburant à l'entrée des cellules de la pile à combustible 18. La pile à combustible 18 peut également comporter un dispositif humidificateur permettant d'humidifier l'air à l'entrée de la pile à combustible 18.

La machine de manutention 1 peut également comporter un dispositif de collecte de l'eau, non représenté, qui permet de collecter l'eau rejetée par la pile à combustible 18. Par ailleurs, le dispositif de collecte de l'eau peut être relié à un orifice d'évacuation de l'eau qui permet d'évacuer l'eau ou à un réservoir permettant de stocker l'eau. Le dispositif de collecte d'eau peut être raccordé au dispositif humidificateur pour l'alimenter en eau.

La machine de manutention 1 comporte, en outre, un équipement électronique de puissance qui comporte notamment un convertisseur de tension DC/DC 21 qui est raccordé, d'un côté, à la pile à combustible 18 et, de l'autre côté, aux moteurs électriques13, 14, 17 et au dispositif de stockage d'énergie électrique 19. Le convertisseur de tension DC/DC 21 permet de convertir le niveau de tension délivré par la pile à combustible 18 au niveau de tension requis par les moteurs électriques 13, 14, 17 et le dispositif de stockage d'énergie électrique 19.

La machine de manutention 1 comporte également des moyens de contrôle, non illustrés, qui sont configurés pour piloter la pile à combustible 18, les moteurs électriques 13, 14, 17 ainsi que le convertisseur de tension DC/DC 21 en fonction des signaux de commande délivrés par des équipements de commande de la machine de manutention 1, tels qu'une pédale d'accélérateur et/ou un joystick de commande notamment.

Le dispositif de stockage d'énergie électrique 19 ainsi que le convertisseur de tension DC/DC 21 sont logés de l'autre côté du châssis 2 par rapport au caisson 12, c'est-à-dire du côté de la cabine de conduite 11. Le dispositif de stockage d'énergie électrique 19 et le convertisseur de tension DC/DC 21 sont, par exemple, logés dans un logement ménagé sous la cabine de conduite 11. Une telle disposition est avantageuse en ce qu'elle permet d'isoler les équipements électroniques des fuites d'hydrogènes susceptibles de se produire, à l'intérieur du caisson 12 ou du châssis 2, ce qui limite encore davantage les risques d'incendie. Cette disposition permet aussi d'isoler le dispositif de stockage d'énergie électrique de la chaleur générée par la pile à combustible, ce qui limite les risques de surchauffe dudit dispositif de stockage d'énergie électrique. Enfin, cette disposition est susceptible de contribuer à un meilleur équilibrage latéral de la machine de manutention 1.

Dans un mode de réalisation non représenté, la machine de manutention 1 comporte un châssis secondaire qui est monté rotatif autour d'un axe de rotation vertical sur le châssis 2 précité. Dans un tel mode de réalisation, le caisson 12, la cabine de conduite 11 ainsi que le logement qui est ménagé sous la cabine de conduite 11 et dans lequel sont disposés le dispositif de stockage d'énergie électrique 19 et le convertisseur de tension DC/DC 21 sont fixés sur le châssis secondaire. De plus, le dispositif de manutention de charge, c'est-à-dire le bras de levage 3, est monté articulé sur le châssis secondaire.

Les figures 3 et 4 illustrent une machine de manutention selon un autre mode de réalisation. Ce mode de réalisation diffère de celui décrit ci-dessus en relation avec les figures 1 et 2 en ce qu'un arbre de transmission 51 qui est accouplé à un moteur, par exemple électrique, non représenté, par l'intermédiaire d'un réducteur 52 et qui relie l'essieu avant 4 et l'essieu arrière 5. L'arbre de transmission 51 s'étend à l'intérieur du châssis 2, parallèlement à la direction longitudinale, et sensiblement au centre du châssis 2, c'est-à-dire suivant l'axe longitudinal médian X. Un tel arbre de transmission 51 permet d'obtenir une motricité des quatre roues 4a, 4b, 5a, 5b en n'utilisant qu'un seul moteur. Le moteur peut également être disposé à l'intérieur du châssis 2.

Dans un tel mode de réalisation, la machine de manutention 1 comporte au moins deux réservoirs 53, 54, 55, 56 répartis latéralement de part et d'autre de l'arbre de transmission 51 afin de conserver une capacité de stockage de l'hydrogène suffisante. Sur la figure 4, on observe que la machine de manutention 1 comporte quatre réservoirs 53, 54, 55, 56. Deux des réservoirs 53, 54, présentent des axes centraux qui sont disposés au-dessus de l'arbre de transmission 51, latéralement de part et d'autre de celui-ci, tandis que les deux autres réservoirs 55, 56 présentent des axes centraux qui sont disposés en-dessous de l'arbre de transmission 51, latéralement de part et d'autre de celui-ci. Comme dans le mode de réalisation des figures 1 et 2, les réservoirs 53, 54, 55, 56 présentent une forme de cylindre de révolution. Les réservoirs 53, 54, 55, 56 sont de préférence orienté de sorte que les génératrices du cylindre de révolution soient orientées parallèlement à la direction longitudinale de la machine de manutention 1.

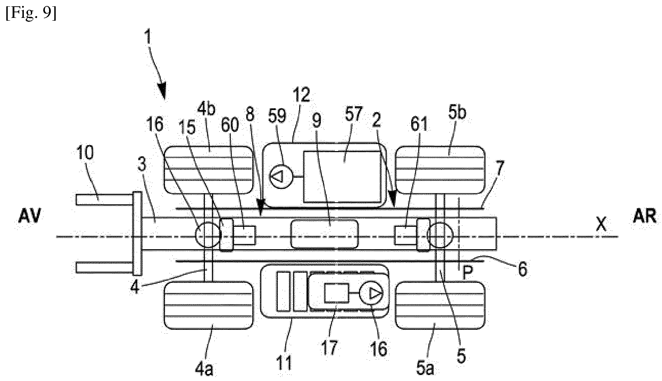

La figure 9 représente une machine de manutention selon un autre mode de réalisation. Dans ce mode de réalisation, le moteur qui est configuré pour assurer le déplacement de la machine de manutention est un moteur à combustion interne à hydrogène 57. De tels moteurs sont généralement désignés par le sigle HICE pour « Hydrogen Internal Combustion Engine » en langue anglaise. Le moteur à combustion interne à hydrogène 57 est disposé, à la place de la pile à combustible 18 des modes de réalisation précédents, c'est-à dire dans le caisson 12. Cette disposition permet ainsi de séparer le moteur à combustion interne 18 du réservoir 9, ce qui limite les risques d'incendie du réservoir 9. Comme dans le mode de réalisation illustré sur la figure 6, la ligne d'alimentation 37 du circuit d'hydrogène traverse l'un des longerons longitudinaux 7 au moyen d'un dispositif passe-paroi 43 afin de relier le réservoir 9 ainsi que le régulateur de pression 38 qui sont logés à l'intérieur du châssis 2 au moteur à combustion interne à hydrogène 57 qui est logé dans le caisson 12. De même, la portion de la ligne de chargement 37 qui est la plus critique au regard des risques d'explosion, à savoir sa portion haute-pression 39, est logée à l'intérieur du châssis 2. Le moteur à combustion interne 37 est accouplé à au moins un des essieux avant 4 et arrière 5, et avantageusement, aux deux par un dispositif de transmission. Sur la figure 9, ce dispositif de transmission comporte une pompe hydraulique 59 qui est accouplée au moteur à combustion interne à hydrogène 57 et qui est logée dans le caisson 12. La pompe hydraulique 59 est hydrauliquement raccordée à deux moteurs hydrauliques 60, 61 qui sont respectivement accouplés à l'essieu avant 4 et à l'essieu arrière 5.

Dans un mode de réalisation alternatif non représenté, le moteur à combustion interne à hydrogène 57 peut également être accouplé aux essieux avant 4 et arrière 5 par l'intermédiaire d'un arbre de transmission 51, tel que décrit ci-dessus en relation avec la figure 3.

Selon une autre variante de réalisation non représentée, le moteur à combustion interne à hydrogène 57 ne sert pas à assurer le déplacement du véhicule mais est associé avec une génératrice de courant de sorte à produire de l'énergie électrique. La génératrice de courant est raccordée au dispositif de stockage d'énergie électrique et/ou au(x) moteur(s) électrique(s) destiné à assurer le déplacement du véhicule.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention telle que définie par les revendications.

L'usage du verbe « comporter », « comprendre » ou « inclure » et de ses formes conjuguées n'exclut pas la présence d'autres éléments ou d'autres étapes que ceux énoncés dans une revendication.

Dans les revendications, tout signe de référence entre parenthèses ne saurait être interprété comme une limitation de la revendication.

## Revendications

1. Machine de manutention (1) comportant :
- un châssis (2) présentant un axe longitudinal médian (X) et comprenant deux longerons longitudinaux (6, 7) s'étendant de part et d'autre de l'axe longitudinal médian (X) ;
- un dispositif de manutention de charge qui est monté mobile sur le châssis (2) ;
- une cabine de conduite (11) qui est fixée au châssis (2) et est positionnée d'un premier côté du châssis (2) par rapport à l'axe longitudinal médian (X) du châssis (2) ;
- au moins un réservoir (9, 53, 54, 55, 56) destiné à contenir de l'hydrogène ; et
- un équipement consommateur d'hydrogène qui est raccordé au réservoir (9, 53, 54, 55, 56) par une ligne d'alimentation (37) et qui est choisi parmi une pile à combustible (18) et un moteur à combustion interne à hydrogène (57), la machine de manutention (1) étant **caractérisée en ce que** :
- le réservoir (9, 53, 54, 55, 56) est logé dans le châssis (2), entre les deux longerons longitudinaux (6, 7) ; en **en ce que** elle comprend un caisson (12) qui est fixé au châssis (2) et est disposé d'un deuxième côté du châssis (2), opposé au premier côté, par rapport à l'axe longitudinal médian (X) et dans laquelle l'équipement consommateur d'hydrogène est logé dans le caisson (12).

2. Machine de manutention (1) selon la revendication 1, dans laquelle la ligne d'alimentation (37) qui raccorde le réservoir (9, 53, 54, 55, 56) à l'équipement consommateur d'hydrogène comporte un régulateur de pression (38) et dans laquelle le régulateur de pression (38) ainsi qu'une portion amont (39) de la ligne d'alimentation (37) qui relie le régulateur de pression (38) au réservoir (9, 53, 54, 55, 56) sont logés dans le châssis (2), entre les deux longerons longitudinaux (6, 7).

3. Machine de manutention (1) selon la revendication 1 ou 2, dans laquelle la ligne d'alimentation (37) comporte un dispositif passe-paroi (43) qui est logé dans un orifice (45) de l'un des deux longerons longitudinaux (6, 7) et qui permet à la ligne d'alimentation (37) de traverser ledit longeron longitudinal (6, 7).

4. Machine de manutention (1) selon l'une quelconque des revendications 1 à 3, comprenant en outre au moins un moteur électrique (13, 14, 17) qui est configuré pour déplacer la machine de manutention (1) ou actionner le dispositif de manutention de charge et dans laquelle l'équipement consommateur d'hydrogène est une pile à combustible (18) qui est configurée pour générer de l'énergie électrique destinée à alimenter le moteur électrique (13, 14, 17).

5. Machine de manutention (1) selon la revendication 4, comportant en outre un dispositif de stockage d'énergie électrique (19), la pile à combustible (18) et le dispositif de stockage d'énergie électrique (19) étant électriquement raccordés, d'une part, l'un à l'autre, et, d'autre part, en parallèle au moteur électrique (13, 14, 17).

6. Machine de manutention (1) selon la revendication 5, dans laquelle le dispositif de stockage d'énergie électrique (19) est logé dans un logement ménagé sous la cabine de conduite (11).

7. Machine de manutention (1) selon la revendication 5 ou 6, comprenant en outre un convertisseur de tension DC/DC (21) qui est raccordé, d'une part, à la pile à combustible (18) et, d'autre part, au moteur électrique (13, 14, 17) et au dispositif de stockage d'énergie électrique (19).

8. Machine de manutention (1) selon la revendication 7, dans lequel le convertisseur de tension DC/DC (21) est logé dans un logement ménagé sous la cabine de conduite (11).

9. Machine de manutention (1) selon l'une quelconque des revendications 1 à 8, dans laquelle l'au moins un réservoir (9, 53, 54, 55, 56) présente une forme de cylindre de révolution autour d'un axe central, le réservoir (9, 53, 54, 55, 56) étant orienté de telle sorte que l'axe central soit parallèle à l'axe longitudinal médian X.

10. Machine de manutention (1) selon l'une quelconque des revendications 1 à 9, comprenant :
- un essieu avant (4) et un essieu arrière (5) qui sont montés sur le châssis (2) transversalement à l'axe longitudinal médian X et comportant chacun deux roues (4a, 4b, 5a, 5b) ;
- un arbre de transmission (51) qui accouple l'essieu avant (4) et l'essieu arrière (5) à un moteur, l'arbre de transmission (51) s'étendant à l'intérieur du châssis (2), entre les deux longerons longitudinaux (6, 7), parallèlement à l'axe longitudinal médian (X) du châssis (2) ;
- au moins deux réservoirs (53, 54, 55, 56) destinés à contenir de l'hydrogène qui sont logés dans le châssis (2), entre les deux longerons longitudinaux (6, 7), latéralement de part et d'autre de l'arbre de transmission (51).

11. Machine de manutention (1) selon la revendication 10, comportant au moins quatre réservoirs (53, 54, 55, 56) destinés à contenir de l'hydrogène qui sont logés dans le châssis (2), deux des quatre réservoirs (53, 54), présentant des axes centraux qui sont disposés au-dessus et latéralement de part et d'autre de l'arbre de transmission, et les deux autres réservoirs (55, 56) présentant des axes centraux qui sont disposés en-dessous et latéralement de part et d'autre de de l'arbre de transmission (51).

12. Machine de manutention (1) selon l'une quelconque des revendications 1 à 9, comprenant :
- un essieu avant (4) et un essieu arrière (5) qui sont montés sur le châssis (2) transversalement à l'axe longitudinal médian X et comportant chacun deux roues (4a, 4b, 5a, 5b) ;
- deux moteurs électriques (13, 14) qui sont respectivement accouplés à l'essieu avant (4) et à l'essieu arrière (5) par un dispositif de transmission et sont logés à l'intérieur du châssis (2) respectivement à l'avant et à l'arrière de l'au moins un réservoir ( 53, 54, 55, 56).

13. Machine de manutention (1) selon l'une quelconque des revendications 1 à 12, dans laquelle le dispositif de manutention de charge comporte un bras de levage (3) qui est articulé aux deux longerons longitudinaux (6, 7), entre lesdits longerons longitudinaux (6, 7) façon à être mobile à pivotement par rapport aux deux longerons longitudinaux (6, 7) autour d'un axe de pivotement (P) transversal.

## Patentansprüche

1. Handhabungsmaschine (1) mit:
- einem Rahmen (2), der eine mittige Längsachse (X) aufweist und zwei Längsträger (6, 7) umfasst, die sich beiderseits der mittigen Längsachse (X) erstrecken;
- einer Last-Handhabungsvorrichtung, die beweglich am Rahmen (2) angebracht ist;
- eine Fahrerkabine (11), die am Rahmen (2) befestigt ist und auf einer ersten Seite des Rahmens (2) in Bezug auf die mittlere Längsachse (X) des Rahmens (2) positioniert ist;
- mindestens einen Tank (9, 53, 54, 55, 56) zur Aufnahme von Wasserstoff;
und
- eine wasserstoffverbrauchende Anlage, die über eine Versorgungsleitung (37) mit dem Tank (9, 53, 54, 55, 56) verbunden ist und die aus einer Brennstoffzelle (18) und einem Wasserstoff-Verbrennungsmotor (57) ausgewählt ist,
wobei die Fördermaschine (1) **dadurch gekennzeichnet ist, dass**:
- der Tank (9, 53, 54, 55, 56) im Rahmen (2) zwischen den beiden Längsträgern (6, 7) untergebracht ist; und dass sie ein Gehäuse (12) umfasst, das am Rahmen (2) befestigt ist und sich auf einer zweiten Seite des Rahmens (2) befindet, die der ersten Seite in Bezug auf die mittlere Längsachse (X) gegenüberliegt, und in dem die wasserstoffverbrauchende Anlage im Gehäuse (12) untergebracht ist.

2. Handhabungsmaschine (1) gemäß Anspruch 1, wobei die Versorgungsleitung (37), die den Tank (9, 53, 54, 55, 56) mit der wasserstoffverbrauchenden Anlage verbindet, einen Druckregler (38) umfasst und wobei der Druckregler (38) sowie ein stromaufwärts Abschnitt (39) der Versorgungsleitung (37), die den Druckregler (38) mit dem Tank (9, 53, 54, 55, 56) verbindet, im Rahmen (2) zwischen den beiden Längsträgern (6, 7) angeordnet sind.

3. Handhabungsmaschine (1) gemäß Anspruch 1 oder 2, wobei die Versorgungsleitung (37) eine Wanddurchführung (43) aufweist, die in einer Öffnung (45) einer der beiden Längsträger (6, 7) aufgenommen ist und die es der Versorgungsleitung (37) ermöglicht, den genannten Längsträger (6, 7) zu durchqueren.

4. Handhabungsmaschine (1) gemäß einem der Ansprüche 1 bis 3, die weiterhin mindestens einen Elektromotor (13, 14, 17), der dazu konfiguriert ist, die Fördermaschine (1) zu bewegen oder die Lastfördervorrichtung zu betätigen, und wobei die wasserstoffverbrauchende Anlage eine Brennstoffzelle (18) ist, die dazu konfiguriert ist, elektrische Energie zur Versorgung des Elektromotors (13, 14, 17) zu erzeugen.

5. Handhabungsmaschine (1) gemäß Anspruch 4, die ferner eine Vorrichtung zur Speicherung elektrischer Energie (19) umfasst, wobei die Brennstoffzelle (18) und die elektrische Energiespeichervorrichtung (19) einerseits elektrisch miteinander und andererseits parallel zum Elektromotor (13, 14, 17) verbunden sind.

6. Handhabungsmaschine (1) gemäß Anspruch 4, die ferner eine Vorrichtung zur Speicherung elektrischer Energie (19) umfasst, wobei die Brennstoffzelle (18) und die Vorrichtung zur Speicherung elektrischer Energie (19) einerseits elektrisch miteinander und andererseits parallel zum Elektromotor (13, 14, 17) verbunden sind.

7. Handhabungsmaschine (1) gemäß Anspruch 5 oder 6, die weiterhin einen DC/DC-Spannungswandler (21) umfasst, der einerseits an die Brennstoffzelle (18) und andererseits an den Elektromotor (13, 14, 17) und an die Vorrichtung zur Speicherung elektrischer Energie (19) angeschlossen ist.

8. Handhabungsmaschine (1) gemäß Anspruch 7, wobei der DC/DC-Wandler (21) in einem unterhalb des Führerhauses (11) angeordneten Gehäuse untergebracht ist.

9. Handhabungsmaschine (1) gemäß einem der Ansprüche 1 bis 8, wobei der mindestens eine Tank (9, 53, 54, 55, 56) die Form eines Rotationszylinders um eine Mittelachse herum aufweist, wobei der Tank (9, 53, 54, 55, 56) so ausgerichtet ist, dass die Mittelachse parallel zur mittleren Längsachse X verläuft.

10. Handhabungsmaschine (1) gemäß einem der Ansprüche 1 bis 9, umfassend:
- eine Vorderachse (4) und eine Hinterachse (5), die quer zur mittleren Längsachse X am Rahmen (2) angebracht sind und jeweils zwei Räder (4a, 4b, 5a, 5b) umfassen;
- eine Antriebswelle (51), die die Vorderachse (4) und die Hinterachse (5) mit einem Motor koppelt, wobei sich die Antriebswelle (51) innerhalb des Rahmen (2) zwischen den beiden Längsträgern (6, 7) parallel zur mittleren Längsachse (X) des Rahmens (2) erstreckt;
- mindestens zwei Tanks (53, 54, 55, 56) bestimmt für die Aufnahme von Wasserstoff, die im Rahmen (2) zwischen den beiden Längsträgern (6, 7) seitlich beiderseits der Antriebswelle (51) untergebracht sind.

11. Handhabungsmaschine (1) gemäß Anspruch 10, die mindestens vier Tanks (53, 54, 55, 56) umfasst, die für die Aufnahme von Wasserstoff bestimmt sind und im Rahmen (2) untergebracht sind, wobei zwei der vier Tanks (53, 54) Mittelachsen aufweisen, die oberhalb und seitlich beiderseits der Antriebswelle angeordnet sind, und die beiden anderen Tanks (55, 56) Mittelachsen aufweisen, die unterhalb und seitlich beiderseits der Antriebswelle (51) angeordnet sind.

12. Handhabungsmaschine (1) gemäß einem der Ansprüche 1 bis 9, die folgende Komponenten umfasst:
- eine Vorderachse (4) und eine Hinterachse (5), die quer zur mittleren Längsachse X am Rahmen (2) angebracht sind und jeweils zwei Räder (4a, 4b, 5a, 5b) aufweisen;
- zwei Elektromotoren (13, 14), die jeweils über eine Getriebevorrichtung mit der Vorderachse (4) und der Hinterachse (5) gekoppelt sind und im Inneren des Rahmens (2) jeweils vor und hinter dem mindestens einen Tank (53, 54, 55, 56) angeordnet sind.

13. Handhabungsmaschine (1) gemäß einem der Ansprüche 1 bis 12, wobei die Lastfördereinrichtung einen Hubarm (3) umfasst, der an den beiden Längsträgern (6, 7) zwischen diesen Längsträgern (6, 7) so gelagert ist, dass er in Bezug auf die beiden Längsträger (6, 7) um eine quer verlaufende Schwenkachse (P) schwenkbar ist.

## Claims

1. A handling machine (1) having:
- a chassis (2) having a median longitudinal axis (X) and comprising two longitudinal members (6, 7) extending on either side of the median longitudinal axis (X);
- a load-handling device, which is mounted so as to be able to move on the chassis (2);
- a driver's cab (11), which is fastened to the chassis (2) and is positioned on a first side of the chassis (2) with respect to the median longitudinal axis (X) of the chassis (2);
- at least one tank (9, 53, 54, 55, 56), which is intended to contain hydrogen and is housed in the chassis (2), between the two longitudinal members (6, 7)
- a hydrogen-consuming equipment, which is connected to the tank (9, 53, 54, 55, 56) via a supply line (37) and which is selected from among a fuel cell (18) and a hydrogen internal combustion engine (57),
the handling machine (1) being **characterised in that** :
- the tank (9, 53, 54, 55, 56) is housed in the frame (2), between the two longitudinal side members (6, 7) and **in that** the handling machine (1) comprises a casing (12), which is fastened to the chassis (2) and is arranged on a second side of the chassis (2), opposite the first side, with respect to the median longitudinal axis (X) and wherein the hydrogen-consuming equipment is housed in the casing (12).

2. The handling machine (1) as claimed in claim 1, wherein the supply line (37) that connects the tank (9, 53, 54, 55, 56) to the hydrogen-consuming equipment has a pressure regulator (38) and wherein the pressure regulator (38) and also an upstream portion (39) of the supply line (37) that connects the pressure regulator (38) to the tank (9, 53, 54, 55, 56) are housed in the chassis (2), between the two longitudinal members (6, 7).

3. The handling machine (1) as claimed in claim 1 or claim 2, wherein the supply line (37) has a bulkhead fitting (43), which is housed in an orifice (45) in one of the two longitudinal members (6, 7) and which allows the supply line (37) to pass through said longitudinal member (6, 7).

4. The handling machine (1) as claimed in any one of claims 1 to 3, also comprising at least one electric motor (13, 14, 17), which is configured to move the handling machine (1) or to actuate the load-handling device, and wherein the hydrogen-consuming equipment is a fuel cell (18) that is configured to generate electrical energy intended to supply the electric motor (13, 14, 17) with power.

5. The handling machine (1) as claimed in claim 4, also having an electrical energy storage device (19), the fuel cell (18) and the electrical energy storage device (19) being electrically connected, on the one hand, to one another and, on the other hand, in parallel to the electric motor (13, 14, 17).

6. The handling machine (1) as claimed in claim 5, wherein the electrical energy storage device (19) is housed in a housing formed beneath the driver's cab (11).

7. The handling machine (1) as claimed in claim 5 or 6, also comprising a DC-to-DC voltage converter (21), which is connected, on the one hand, to the fuel cell (18) and, on the other hand, to the electric motor (13, 14, 17) and to the electrical energy storage device (19).

8. The handling machine (1) as claimed in claim 7, wherein the DC-to-DC voltage converter (21) is housed in a housing formed beneath the driver's cab (11).

9. The handling machine (1) as claimed in any one of claims 1 to 8, wherein the at least one tank (9, 53, 54, 55, 56) has the shape of a cylinder of revolution about a central axis, the tank (9, 53, 54, 55, 56) being oriented so that the central axis is parallel to the median longitudinal axis X.

10. The handling machine (1) as claimed in any one of claims 1 to 9, comprising:
- a front axle (4) and a rear axle (5), which are mounted on the chassis (2) transversely to the median longitudinal axis X and each have two wheels (4a, 4b, 5a, 5b);
- a transmission shaft (51), which couples the front axle (4) and the rear axle (5) to a motor, the transmission shaft (51) extending inside the chassis (2), between the two longitudinal members (6, 7), parallel to the median longitudinal axis (X) of the chassis (2);
- at least two tanks (53, 54, 55, 56), which are intended to contain hydrogen and are housed in the chassis (2), between the two longitudinal members (6, 7), laterally on either side of the transmission shaft (51).

11. The handling machine (1) as claimed in claim 10, having at least four tanks (53, 54, 55, 56), which are intended to contain hydrogen and are housed in the chassis (2), two of the four tanks (53, 54) having central axes that are arranged above and laterally on either side of the transmission shaft, and the other two tanks (55, 56) having central axes that are arranged below and laterally on either side of the transmission shaft (51).

12. The handling machine (1) as claimed in any one of claims 1 to 9, comprising:
- a front axle (4) and a rear axle (5), which are mounted on the chassis (2) transversely to the median longitudinal axis X and each have two wheels (4a, 4b, 5a, 5b);
- two electric motors (13, 14), which are respectively coupled to the front axle (4) and to the rear axle (5) via a transmission device and are housed inside the chassis (2), respectively in front of and to the rear of the at least one tank (53, 54, 55, 56).

13. The handling machine (1) as claimed in any one of claims 1 to 12, wherein the load-handling device has a lifting arm (3), which is connected in an articulated manner to the two longitudinal members (6, 7), between said longitudinal members (6, 7) so as to be able to pivot with respect to the two longitudinal members (6, 7) about a transverse pivot axis (P).
